# EUROPÄISCHE PATENTANMELDUNG

(11) **EP 4 226 825 A1**
(43) Veröffentlichungstag der Anmeldung: **16.08.2023**
(21) Anmeldenummer: 22156600.3
(22) Anmeldetag: 14.02.2022
(51) Int. Cl.: A47L 5/24, A47L 9/02, A47L 9/19, A47L 9/28

(54) **SAUGGERÄT SOWIE VERFAHREN ZUR ERMITTLUNG EINES FÜLLGRADES EINER FILTEREINRICHTUNG EINES SAUGGERÄTES**

(71) Anmelder: Vorwerk & Co. Interholding GmbH, 42270 Wuppertal (DE)
(72) Erfinder: MOSQUERA MICHAELSEN, Pablo, 45473 Mülheim (DE)
(74) Vertreter: Dr. Solf & Zapf Patent- und Rechtsanwalts PartG mbB

(57) **Zusammenfassung**

Die vorliegende Erfindung betrifft ein Sauggerät (1) mit mindestens einem Gebläse (2) zum Erzeugen eines Saugluftstroms in einem Saugkanal (3), mindestens einer Filtereinrichtung (4) zur Aufnahme von Sauggut (5), mindestens einer Druckmesseinrichtung (6) und mindestens einer Steuereinrichtung (7), wobei das Sauggerät (1) zum Koppeln mit einer Mehrzahl unterschiedlicher Vorsatzgeräte (8) an den Saugkanal (3) ausgebildet ist sowie ein Verfahren (100) zur Ermittlung eines Füllgrades einer Filtereinrichtung (4) eines Sauggerätes (1).

Ein Sauggerät (1) sowie ein Verfahren (100) zur Ermittlung des Füllgrades, die eine möglichst präzische Anzeige des Füllgrades der Filtereinrichtung (4) gewährleisten, gleichzeitig aber kostengünstig realisierbar sind, werden realisiert, indem, die Steuereinrichtung (7) zur Ermittlung eines Füllgrades der Filtereinrichtung (4) unter Verwendung mindestens eines Druckmesswertes und von Kennliniendaten (105) sowie zur Auswahl der für die Ermittlung verwendeten Kennliniendaten in Abhängigkeit von einem mit dem Sauggerät (1) verbundenen Vorsatzgerät (8) ausgebildet und eingerichtet ist.

## Beschreibung

Die Erfindung betrifft ein Sauggerät, mit mindestens einem Gebläse zum Erzeugen eines Saugluftstroms in einem Saugkanal. Das Sauggerät verfügt ferner über mindestens eine Filtereinrichtung zur Aufnahme von Sauggut, mindestens eine Druckmesseinrichtung und mindestens eine Steuereinrichtung. Ferner betrifft die Erfindung ein Verfahren zur Ermittlung eines Füllgrades einer Filtereinrichtung eines Sauggerätes. Das Sauggerät weist mindestens einen Saugkanal auf und ist zum Koppeln mit einer Mehrzahl unterschiedlicher Vorsatzgeräte an den Saugkanal ausgebildet.

Sauggeräte und Verfahren zu deren Betrieb sind im Stand der Technik in einer Vielzahl von Ausgestaltungen bekannt. Als Sauggeräte werden üblicherweise Staubsauger, Handstaubsauger, Saugroboter und Saug-Wisch-Roboter bezeichnet. Um dem Benutzer die rechtzeitige Leerung oder den Austausch der Filtereinrichtung zu ermöglichen, ist es im Stand der Technik bekannt, den Füllgrad einer Filtereinrichtung, beispielsweise den Füllgrad eines Filterbeutels, über eine Differenzdruckmessung des Druckes in Strömungsrichtung vor und hinter der Filtereinrichtung zu bestimmen. Die Differenzdruckmessung führt allerdings zu erheblichen Zusatzkosten für Schläuche, Dichtelemente, Drucksensoren sowie deren Montage.

Der vorliegenden Erfindung liegt daher die Aufgabe zu Grunde, ein Sauggerät sowie ein Verfahren zur Ermittlung des Füllgrades anzugeben, die eine möglichst präzise Anzeige des Füllgrades der Filtereinrichtung gewährleisten, gleichzeitig aber kostengünstig realisierbar sind.

Die vorgenannte Aufgabe ist bei einem gattungsgemäßen Sauggerät mit den Merkmalen des Kennzeichnungsteils des Anspruchs 1 gelöst, nämlich dadurch, dass die Steuereinrichtung zur Ermittlung eines Füllgrades der Filtereinrichtung unter Verwendung mindestens eines Druckmesswertes und von Kennliniendaten ausgebildet und eingerichtet ist. Die für die Ermittlung erforderlichen Kennliniendaten müssen vorab ausgewählt werden, so dass die Steuereinheit ferner zur Auswahl der für die Ermittlung verwendeten Kennliniendaten in Abhängigkeit von einem mit dem Sauggerät verbundenen Vorsatzgerät eingerichtet und ausgebildet ist. Die Steuereinrichtung weist vorzugsweise Mittel auf, um den Füllgrad wie beschrieben zu ermitteln und die Auswahl der Kennliniendaten auszuführen.

Bei dem Sauggerät handelt es sich vorzugsweise um ein Reinigungsgerät, bei dem eine Reinigungsfunktion zumindest teilweise unter Verwendung eines Saugluftstroms durchgeführt wird, beispielsweise einen Staubsauger, einen Handstaubsauger, einen Saugroboter oder einen Saug-Wisch-Roboter. Unter Vorsatzgerät werden sämtliche Komponenten verstanden, die an das Sauggerät ankoppelbar sind und dann zumindest teilweise von der Saugluft durchströmt werden. Beispielsweise ist der Saugluftkanal zumindest teilweise im Vorsatzgerät ausgebildet. Vorzugsweise handelt es sich bei dem Vorsatzgerät bzw. den Vorsatzgeräten um Bodendüsen, Bürsteneinheiten, Polsterdüsen, Bohrstaubdüsen, Fugendüsen oder sonstige Zubehördüsen und ähnliche - aktive und passive - Komponenten.

Das Sauggerät weist vorteilhaft ein Gehäuse auf. Das Sauggerät verfügt über mindestens ein Gebläse zum Erzeugen eines Saugluftstroms in dem mindestens einen Saugkanal. Mit dem Saugkanal in Verbindung steht mindestens eine Filtereinrichtung, die zur Aufnahme von Sauggut ausgebildet ist. Die Filtereinrichtung wird im Betrieb des Sauggerätes von zumindest einem Teil der Saugluft durchströmt, so dass die Filtereinrichtung Sauggut aus einem Saugluftstrom abscheiden kann. Die Filtereinheit weist beispielsweise einen Filterbeutel aus einem Filtervlies, einen reinigbaren Mehrfachfilter oder einen Filterzyklon auf. Die Filtereinheit weist jedenfalls eine Abscheideeinrichtung auf, die dazu geeignet ist, Sauggut aus dem Saugluftstrom abzureinigen.

Das Sauggerät verfügt ferner über mindestens eine Druckmesseinrichtung, die dazu ausgebildet ist, einen Druck an mindestens einer Stelle des Saugkanals zu messen und insbesondere daraus einen Messwert zur Weitergabe an eine Steuereinrichtung zu generieren. Die Druckmesseinrichtung weist vorteilhaft mindestens einen Drucksensor, insbesondere einen Drucksensor mit Dehnungsmesstreifen, einen variablen kapazitiven Drucksensor, einen piezoelektrischen Drucksensor oder einen optischen Drucksensor auf. Vorzugsweise weist das Sauggerät genau eine Druckmesseinrichtung mit genau einem Drucksensor auf.

Die Steuereinrichtung des Sauggerätes umfasst beispielsweise mindestens eine Datenverarbeitungseinrichtung, aufweisend mindestens einen Prozessor und mindestens ein Speichermittel. Vorzugsweise ist vorgesehen, dass die Steuereinrichtung ferner mindestens eine Datenschnittstelle aufweist. Die Datenschnittstelle ist beispielsweise als Datenschnittstelle nach einem Funkstandard, insbesondere WLAN, ZigBee, 5G oder Bluetooth ausgebildet.

Das Sauggerät ist zum Koppeln mit jeweils einem Vorsatzgerät aus einer Mehrzahl von unterschiedlichen Vorsatzgeräten an den Saugkanal ausgebildet. Vorzugsweise ist das jeweils eine Vorsatzgerät an ein von dem Sauggerät weggewandten Ende eines Saugkanals anordenbar, so dass mit dem Vorsatzgerät die Reinigungsarbeiten durchgeführt werden können. Jedes Vorsatzgerät ist mit dem Sauggerät form- und/oder kraftschlüssig verbindbar.

Um den Füllgrad der Filtereinrichtung ermitteln zu können, weist die Steuereinrichtung Mittel auf, um den Füllgrad unter Verwendung mindestens eines Druckmesswertes der Druckmesseinrichtung und von Kennliniendaten zu ermitteln. Die Auswahl der für die Ermittlung verwendeten Kennliniendaten erfolgt dabei in Abhängigkeit von einem mit dem Sauggerät verbundenen Vorsatzgerät. Die Kennliniendaten umfassen vorzugsweise empirische, insbesondere im Labor ermittelte Daten, beispielsweise zum Druck an mindestens einer Position, vorteilhaft an mehreren Positionen im Saugkanal, bei unterschiedlichen Kombinationen von Leistungszustand des Gebläses, Füllgrad der Filtereinheit und unterschiedlichen Vorsatzgeräten. Vorzugsweise werden die Kennliniendaten in einem Speichermittel des Sauggerätes bereitgehalten. Beispielsweise repräsentieren die Kennliniendaten zumindest eine Überdruckkennlinie, die den Überdruck an einer bestimmten Position im Saugkanal gegenüber dem Volumenstrom angibt.

Welche Kennliniendaten aus einer Vielzahl von Kennliniendaten zur Ermittlung des Füllgrades unter Verwendung des Druckmesswertes herangezogen werden, hängt von dem mit dem Sauggerät gekoppelten Vorsatzgerät ab. Unterschiedliche Vorsatzgeräte drosseln den Saugluftstrom im Saugkanal auf unterschiedliche Art und Weise, was sich auf die Ermittlung des Füllgrades auswirkt. Zur Ermittlung des Füllgrades der Filtereinrichtung unter Verwendung lediglich eines Druckmesswertes und der in einem Speichermittel vorhandenen Kennliniendaten ist daher die Kenntnis der Art des Vorsatzgerätes erforderlich. Je nach Vorsatzgerät werden folglich unterschiedliche Kennliniendaten zur Ermittlung des Füllgrades der Filtereinrichtung herangezogen.

Beispielsweise erfolgt das Ermitteln von Druckmesswerten, das Auswählen und das Ermitteln des Füllgrades kontinuierlich, in bestimmten Zeitabständen, für bestimmte Zeiträume und/oder ereignisbasiert.

Beispielsweise ist vorgesehen, dass der ermittelte Füllgrad einem Benutzer in Form eines Füllstandes an einer Anzeigeeinrichtung des Sauggerätes anzeigbar ist. Ferner ist vorgesehen, dass der ermittelte Füllgrad zur Anzeige an einem mobilen Endgerät an einer Datenschnittstelle bereitgestellt wird.

Vorteilhaft ist das Sauggerät, vorzugsweise die Steuereinrichtung, dazu ausgebildet und eingerichtet, das Vorhandensein eines Vorsatzgerätes zu erkennen. Ist kein Vorsatzgerät mit dem Sauggerät verbunden, so ist die Steuereinrichtung dazu ausgebildet, die Ermittlung des Füllgrades der Filtereinrichtung unter Verwendung des mindestens einen Druckmesswertes und von einem Teil der Kennliniendaten durchzuführen, die für den Fall des Nichtvorhandenseins eines Vorsatzgerätes vorliegen.

Die Steuereinrichtung weist folglich mindestens eine Vorsatzgeräteschnittstelle auf, mit der das Erkennen des Vorhandenseins eines Vorsatzgerätes möglich ist. Zudem sind bei vorhandenem Vorsatzgerät mit der Vorsatzgeräteschnittstelle vorzugsweise Identifikationsdaten bezüglich des Vorsatzgerätes empfangbar, übermittelbar und insbesondere von der Steuereinrichtung verarbeitbar. Mit der Steuereinrichtung ist vorteilhaft eine Vorsatzgeräteerkennung durchführbar.

Die Erfindung unterscheidet sich gegenüber dem Stand der Technik dadurch, dass für jedes Vorsatzgerät andere, insbesondere empirisch ermittelte, Kennliniendaten bzw. ein anderer Teil der Kennliniendaten zur Ermittlung des Füllgrades verwendet werden. So können die unterschiedlichen Drosseleigenschaften jedes Vorsatzgerätes bei der Ermittlung des Füllgrades berücksichtigt werden. Die vorliegende Erfindung hat gegenüber dem Stand der Technik den Vorteil, dass der Füllstand der Filtereinheit mit einer hohen Genauigkeit angegeben werden kann, wobei gleichzeitig der Aufwand für die Realisierung niedrig ist.

Gemäß einer ersten Ausgestaltung des Sauggerätes hat es sich als vorteilhaft herausgestellt, wenn vorgesehen ist, dass der mindestens eine Druckmesswert einen Überdruckmesswert repräsentiert. Vorteilhaft repräsentiert der Druckmesswert einen Überdruckmesswert, der im Strömungskanal an einer Stelle in Strömungsrichtung hinter dem Gebläse erfasst worden ist. Die Druckmesseinrichtung ist vorteilhaft in Strömungsrichtung hinter dem Gebläse angeordnet, wodurch insbesondere eine einfache Zugänglichkeit der Druckmesseinheit bei gleichzeitig zuverlässigen Messwerten gewährleistet wird.

Um den Füllgrad zu ermitteln, ist gemäß einer weiteren Ausgestaltung insbesondere vorgesehen, dass die Steuereinrichtung derart ausgebildet und eingerichtet ist, dass zumindest ein Abgleichen des mindestens einen Druckmesswertes mit zumindest einem Teil der Kennliniendaten erfolgt. Vorzugsweise erfolgt ein Abgleichen mit zumindest dem Teil der Kennliniendaten, der in Abhängigkeit von dem mit dem Sauggerät verbundenen Vorsatzgerät für die Ermittlung von der Steuereinheit ausgewählt worden ist. Durch den Abgleich des Druckmesswertes mit zumindest einem Teil der Kennliniendaten erfolgt insbesondere eine Zuordnung eines Füllgrades zu dem Druckmesswert.

Als besonders vorteilhaft hat sich gemäß einer weiteren Ausgestaltung des Sauggerätes herausgestellt, wenn vorgesehen ist, dass zumindest ein Teil der Kennliniendaten eine Mehrzahl an Überdruckschwellenwerten repräsentiert, wobei jedem Überdruckschwellenwert mindestens ein, insbesondere empirisch ermittelter, Füllgrad der Filtereinrichtung zugeordnet ist. Im Rahmen der Ermittlung des Füllgrades wird der aktuelle Druckmesswert, insbesondere Überdruckmesswert, mit jedem der Mehrzahl an Überdruckschwellenwerten verglichen. Kommt es zu einer Übereinstimmung bzw. fällt der aktuell gemessene Druckmesswert in einen von den Überdruckschwellenwerten definierten Bereich, wird der aktuelle Druckmesswert diesem Überdruckschwellenwert zugeordnet und der zugehörige Füllgrad der Filtereinrichtung als aktueller Füllgrad der Filtereinrichtung ausgewählt.

Um eine Abhängigkeit der Kennliniendaten von dem Vorsatzgerät zu ermöglichen, ist gemäß einer weiteren Ausgestaltung vorgesehen, dass für jedes Vorsatzgerät aus einer Vielzahl von Vorsatzgeräten ein unterschiedlicher Satz, also eine Mehrzahl von Überdruckschwellenwerten für unterschiedliche Drosselzustände im Saugkanal, bereitgehalten wird. Insbesondere wird zumindest ein eigener Satz von Überdruckschwellenwerten für jede Kombination aus Leistungsstufe des Gebläses und jedem Vorsatzgerät aus einer Mehrzahl von Vorsatzgeräten bereitgehalten.

Neben den Strömungseigenschaften im Saugkanal wird die Ermittlung des Füllgrades der Filtereinrichtung durch die vom Benutzer gewählte Leistungsstufe des Gebläses beeinflusst. Gemäß einer weiteren Ausgestaltung des Sauggerätes ist daher vorgesehen, dass die Steuereinrichtung derart eingerichtet und ausgebildet ist, dass eine Auswahl der für die Ermittlung verwendeten Kennliniendaten ferner in Abhängigkeit von der von einem Benutzer gewählten Leistungsstufe des Gebläses erfolgt. Beispielsweise verfügt das Sauggerät über fünf Leistungsstufen. In einem Speichermittel sind folglich für jede der fünf Leistungsstufen Kennliniendaten abgelegt, die beispielsweise repräsentieren, welcher Druckmesswert, insbesondere Überdruckmesswert, zu welchem Füllgrad der Filtereinheit korrespondiert.

Vorzugsweise um das Vorsatzgerät, das an das Sauggerät gekoppelt ist, zu identifizieren, werden gemäß einer weiteren Ausgestaltung des Sauggerätes beispielsweise das Vorsatzgerät betreffende Identifikationsdaten durch Auslesen mindestens eines Identifikationsmittels des Vorsatzgerätes verarbeitet, z. B. also erhalten oder erzeugt. Es ist vorgesehen, dass Identifikationsdaten an einer Vorsatzgeräteschnittstelle übergeben und/oder erzeugt werden.

Es ist vorgesehen, dass die Vorsatzgeräteschnittstelle mindestens einen physischen Kontakt, beispielsweise einen Steckverbinder, aufweist, um das Vorsatzgerät elektrisch mit der Steuereinheit zu verbinden. Beispielsweise ermöglicht der physische Kontakt den leitungsgebundenen Austausch von Daten, vorzugsweise jedenfalls aber eine Identifikation des Vorsatzgerätes durch die Steuereinheit, also die Verarbeitung von Identifikationsdaten.

Es ist auch vorgesehen, dass das Vorsatzgerät über mindestens einen RFID-Chip verfügt, der von einer entsprechend angeordneten Vorsatzgeräteschnittstelle des Sauggerätes ausgelesen wird, um dadurch Identifikationsdaten zu erzeugen, die von der Steuereinheit für die Ermittlung des Füllgrades verwendet werden können. Beispielsweise ist die Vorsatzgeräteschnittstelle als Bluetooth-Schnittstelle oder andere Nahbereichskommunikationsschnittstelle ausgebildet.

Ferner ist insbesondere vorgesehen, dass das Vorsatzgerät Identifikationsdaten aktiv an einer Vorsatzgeräteschnittstelle an die Steuereinheit bereitstellt bzw. übermittelt.

Alternativ oder zusätzlich ist vorteilhaft vorgesehen, dass die das Vorsatzgerät betreffenden Identifikationsdaten an einer Datenschnittstelle des Sauggerätes verarbeitet und/oder bereitgestellt und/oder erzeugt werden. Beispielsweise gibt der Benutzer Angaben über die Identifikation des Vorsatzgerätes in ein mobiles Endgerät, beispielsweise ein Smartphone, ein, und dieses stellt dann entsprechende Identifikationsdaten für das Sauggerät an der Datenschnittstelle zur Verfügung. Zudem ist auch vorgesehen, dass der Benutzer beispielsweise einen Datencode an dem Vorsatzgerät mit einem mobilen Endgerät, beispielsweise einem Smartphone, scannt, wodurch das Smartphone Identifikationsdaten erstellt und diese über eine Datenschnittstelle, beispielsweise WiFi, Bluetooth oder ähnliches, an das Sauggerät übermittelt.

Des Weiteren ist alternativ oder zusätzlich bevorzugt vorgesehen, dass die Steuereinheit des Sauggerätes Identifikationsdaten des Vorsatzgerätes über eine Datenschnittstelle in einem Netzwerk abrufen kann oder diese Daten von dem Netzwerk, z. B. über das Internet, bereitgestellt werden, beispielsweise von einem Server.

In diesem Zusammenhang hat es sich gemäß einer weiteren Ausgestaltung als besonders vorteilhaft herausgestellt, wenn vorgesehen ist, dass zumindest ein Teil der Kennliniendaten, vorzugsweise alle erforderlichen Kennliniendaten, in einem Speichermittel, insbesondere einem Speichermittel der Steuereinrichtung, bereitgehalten werden. Alternativ oder zusätzlich dazu ist vorgesehen, dass zumindest ein Teil der Kennliniendaten über eine Datenschnittstelle abrufbar oder übermittelbar ist. Beispielsweise kann die Steuereinrichtung des Sauggerätes über die Datenschnittstelle auf ein Netzwerk, beispielsweise das Internet, zugreifen und so insbesondere neue Kennliniendaten von einem Server oder einem mobilen Endgerät des Benutzers abrufen.

Ferner ist vorgesehen, dass aktualisierte Kennliniendaten oder Kennliniendaten für neue Vorsatzgeräte aktiv über die Datenschnittstelle an die Steuereinrichtung des Sauggerätes übermittelt werden oder das Sauggerät mit der Steuereinrichtung diese Kennliniendaten über ein Netzwerk von einem Server oder einem mobilen Endgerät abrufen kann. Auf diese Weise können neue Kennliniendaten, beispielsweise für neu angeschaffte Vorsatzgeräte, an das Sauggerät übermittelt werden.

Insbesondere um einen Arbeitsspeicher der Steuereinrichtung geringstmöglich auszulasten, ist gemäß einer weiteren Ausgestaltung vorgesehen, dass die Steuereinrichtung derart ausgebildet und eingerichtet ist, dass zumindest ein Teil der Kennliniendaten, insbesondere solche Kennliniendaten, die für die aktuell vom Benutzer gewählte Leistungsstufe und das aktuell gekoppelte Vorsatzgerät relevant sind, bei jedem Einschalten des Sauggerätes und/oder bei jedem Wechsel des Vorsatzgerätes und/oder bei jedem Wechsel der Leistungsstufe von der Steuereinrichtung aus dem Speichermittel geladen und für eine Ermittlung bereitgehalten werden. Insbesondere werden die geladenen Kennliniendaten für einen Abgleich mit dem aktuell gemessenen Druckmesswert bereitgehalten.

Die Erfindung betrifft ferner ein Verfahren mit Verfahrensschritten, die für die vorstehenden Ausführungsbeispiele des Sauggerätes beschrieben worden sind.

Die eingangs genannte Aufgabe ist ferner durch ein Verfahren zur Ermittlung eines Füllgrades einer Filtereinrichtung eines Sauggerätes mit mindestens einem Saugkanal gelöst. Das Sauggerät ist zum Koppeln mit einer Mehrzahl unterschiedlicher Vorsatzgeräte an den Saugkanal ausgebildet. Das Verfahren weist zumindest die folgenden Verfahrensschritte auf.
- Verarbeiten von Identifikationsdaten eines mit dem Sauggerät gekoppelten Vorsatzgerätes,
- Ermitteln mindestens eines Druckmesswertes innerhalb des Saugkanals,
- Ermitteln mindestens eines Füllgrades der Filtereinrichtung unter Verwendung der verarbeiteten Identifikationsdaten des Vorsatzgerätes, des Druckmesswertes sowie von Kennliniendaten.

Das Verfahren umfasst das Verarbeiten von Identifikationsdaten eines mit dem Sauggerät gekoppelten Vorsatzgerätes. Diese Identifikationsdaten können auch die Information repräsentieren, dass kein Vorsatzgerät mit dem Sauggerät gekoppelt ist. Das Verarbeiten von Identifikationsdaten umfasst beispielsweise das Empfangen, Ergänzen, Erzeugen und/oder Übermitteln von Identifikationsdaten.

Des Weiteren erfolgt, vorher, gleichzeitig und/oder anschließend, ein Ermitteln mindestens eines Druckmesswertes innerhalb des Saugkanals.

Abschließend erfolgt ein Ermitteln eines Füllgrades der Filtereinrichtung unter Verwendung der verarbeiteten Identifikationsdaten des Vorsatzgerätes, des mindestens einen Druckmesswertes sowie von Kennliniendaten, insbesondere so, wie vorstehend für die Ausführungsbeispiele des Sauggerätes beschrieben. Das Ermitteln des Druckmesswertes innerhalb des Saugkanals erfolgt vorzugsweise mit einer Druckmesseinrichtung des Sauggerätes.

Gemäß einer ersten Ausgestaltung des Verfahrens ist vorgesehen, dass das Ermitteln des Füllgrades die Auswahl von Kennliniendaten umfasst. Die Auswahl der Kennliniendaten erfolgt vorzugsweise unter Verwendung der Identifikationsdaten. Die Auswahl der Kennliniendaten, die zur Ermittlung des Füllgrades herangezogen werden, erfolgt also in Abhängigkeit von dem mit dem Sauggerät gekoppelten Vorsatzgerät. Dadurch werden die Kennliniendaten für die Ermittlung herangezogen, die für den durch das aktuell gekoppelte Vorsatzgerät erzeugten Drosselzustand im Saugkanal relevant sind.

Eine weitere Ausgestaltung des Verfahrens sieht vor, dass die Auswahl der Kennliniendaten ferner in Abhängigkeit von einer von dem Benutzer gewählten Leistungsstufe des Gebläses erfolgt. Auch die Leistungsstufe des Gebläses beeinflusst die Druckverhältnisse im Saugkanal. Um den Füllgrad der Filtereinheit auf Basis eines aktuellen Druckmesswertes und der Kennliniendaten in einem Speicher ermitteln zu können, ist folglich die Berücksichtigung der von dem Benutzer gewählten Leistungsstufe erforderlich.

Als besonders vorteilhaft hat sich gemäß einer weiteren Ausgestaltung des Verfahrens herausgestellt, wenn vorgesehen ist, dass das Ermitteln des Füllgrades der Filtereinheit ein Abgleichen des Druckmesswertes, insbesondere des aktuell ermittelten Druckmesswertes, mit mindestens einem Teil der ausgewählten Kennliniendaten umfasst, insbesondere wie vorstehend für die Ausführungsbeispiele des Sauggerätes beschrieben.

Gemäß einer weiteren Ausgestaltung des Verfahrens ist vorgesehen, dass zumindest ein Teil der Kennliniendaten eine Mehrzahl von

Überdruckschwellenwerten repräsentiert, wobei jedem Überdruckschwellenwert mindestens ein Füllgrad der Filtereinrichtung zugeordnet ist. Durch einen Vergleich des aktuell erfassten Druckmesswertes mit den gespeicherten Überdruckschwellenwerten kann der zugehörige Füllgrad der Filtereinrichtung ermittelt und als aktueller Füllgrad der Filtereinrichtung ausgewählt werden.

Bevorzugt ist vorgesehen, dass für jedes Vorsatzgerät aus einer Mehrzahl von Vorsatzgeräten ein unterschiedlicher Satz von Überdruckschwellenwerten in den Kennliniendaten bereitgehalten wird. Zudem ist insbesondere vorgesehen, dass ein eigener Satz von Überdruckschwellenwerten für jede Kombination aus Leistungsstufe des Gebläses und jedem Vorsatzgerät aus einer Mehrzahl von Vorsatzgeräten bereitgehalten wird. Auf diese Weise ist eine einfache Ermittlung des Füllgrades der Filtereinrichtung durch Abgleich des aktuellen Druckmesswertes mit den für die Ermittlung ausgewählten Überdruckschwellenwerten möglich.

Eine weitere Ausgestaltung des Verfahrens sieht vor, dass das Verarbeiten von Identifikationsdaten das Erzeugen von Identifikationsdaten durch die Steuereinrichtung und/oder das Empfangen und/oder Übermitteln von Identifikationsdaten über eine Vorsatzgeräteschnittstelle und/oder das Empfangen und/oder Übermitteln von Identifikationsdaten betreffend das gekoppelte Vorsatzgerät über eine Datenschnittstelle umfasst, insbesondere wie vorstehend für die Ausführungsbeispiele des Sauggeräts beschrieben.

Alternativ oder zusätzlich dazu ist vorgesehen, dass Identifikationsdaten über eine Vorsatzgeräteschnittstelle empfangen oder übermittelt werden. Die Vorsatzgeräteschnittstelle stellt beispielsweise eine Datenschnittstelle zum Vorsatzgerät dar, über die das Vorsatzgerät Daten übermitteln kann oder Daten durch die Steuereinrichtung empfangen werden können. Die Vorsatzgeräteschnittstelle ist beispielsweise als physischer Kontakt, beispielsweise als Steckverbinder, ausgebildet.

Ferner alternativ oder zusätzlich dazu ist vorgesehen, dass das Empfangen und/oder Übermitteln von Identifikationsdaten betreffend das aktuell gekoppelte Vorsatzgerät über eine Datenschnittstelle umfasst ist. Beispielsweise übermittelt der Benutzer Identifikationsdaten betreffend das aktuell gekoppelte Vorsatzgerät über eine Eingabe an seinem Smartphone an die Steuereinrichtung des Sauggerätes.

Als besonders vorteilhaft hat sich gemäß einer letzten Ausgestaltung des Verfahrens herausgestellt, wenn vorgesehen ist, dass bei jedem Einschalten des Sauggerätes und/oder bei jedem Wechsel des Vorsatzgerätes und/oder bei jedem Wechsel der Leistungsstufe des Gebläses die zu der aktuellen Kombination von Leistungsstufe und Vorsatzgerät korrespondierenden Überdruckschwellenwerte zur Zuordnung eines Füllstandes von der Steuereinrichtung aus dem Speichermittel ausgelesen und für eine Ermittlung des Füllgrades bereitgehalten werden. Auf diese Weise kann die Auslastung eines Arbeitsspeichers der Steuereinrichtung reduziert werden.

Die Erfindung betrifft ferner ein Sauggerät, insbesondere mit einer Steuereinrichtung, das zur Durchführung eines Verfahrens gemäß den vorstehend beschriebenen Ausführungsbeispielen ausgebildet und eingerichtet ist.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel eines Sauggerätes in teilweise geschnittener Seitenansicht,
- Fig. 2: ein Ausführungsbeispiel eines Vorsatzgerätes in perspektivischer, teilweise geschnittener Ansicht, und
- Fig. 3: ein Ausführungsbeispiel eines schematischen Ablaufs eines erfindungsgemäßen Verfahrens.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

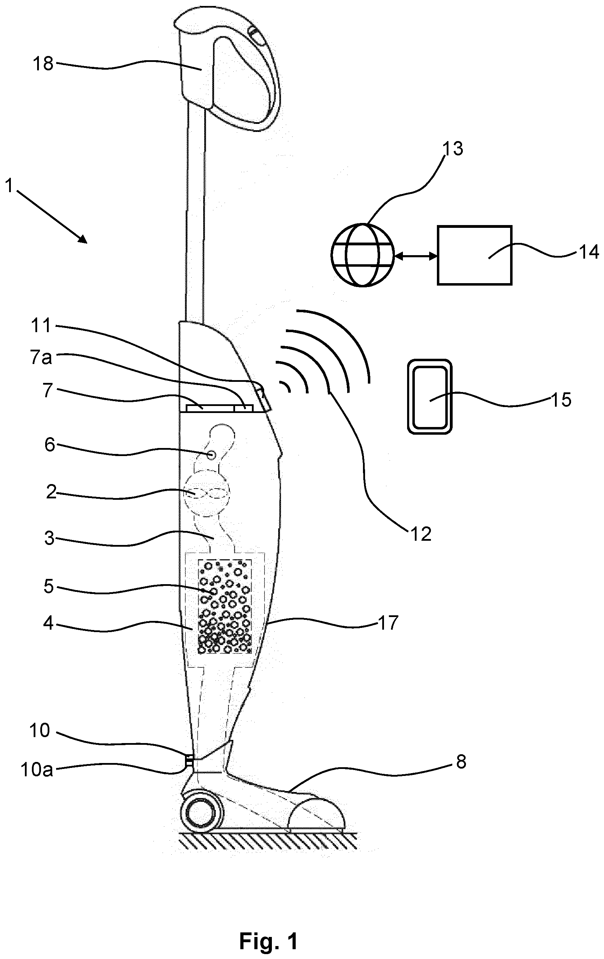

Fig. 1 zeigt ein Ausführungsbeispiel eines Sauggerätes 1 in perspektivischer, zumindest teilweise geschnittener Seitenansicht. Das Sauggerät 1 weist mindestens ein Gebläse 2 zum Erzeugen eines Saugluftstroms in einem Saugkanal 3 auf. Das Sauggerät 1 verfügt ferner über eine Filtereinrichtung 4 zur Aufnahme von Sauggut 5. Innerhalb des Saugkanals 3 ist zudem mindestens eine Druckmesseinrichtung 6 angeordnet. Das Sauggerät 1 weist ein Gehäuse 17 auf, in dem die wesentlichen Bauelemente des Sauggerätes 1 angeordnet sind. An dem Gehäuse 17 ist ein Handgriff 18 angeordnet, mit dem der Staubsauger von einem Benutzer geführt und bedient werden kann.

Das Sauggerät 1 weist innerhalb des Gehäuses 17 eine Steuereinrichtung 7 auf, die bei diesem Ausführungsbeispiel eine Datenverarbeitungseinrichtung mit Prozessor und Speichermittel 7a umfasst. Das Sauggerät 1 ist zum Koppeln mit einer Mehrzahl unterschiedlicher Vorsatzgeräte 8 an das Sauggerät 1 zur Verbindung mit dem Saugkanal 3 ausgebildet.

Die Steuereinrichtung 7 ist zur Ermittlung eines Füllgrades der Filtereinrichtung 4 unter Verwendung mindestens eines Druckmesswertes und von Kennliniendaten ausgebildet und eingerichtet. Ferner ist die Steuereinrichtung 7 vorab zur Auswahl der für die Ermittlung verwendeten Kennliniendaten in Abhängigkeit von einem mit dem Sauggerät 1 verbundenen Vorsatzgerät 8 ausgebildet und eingerichtet. Die Kennliniendaten werden vorzugsweise in einem Speichermittel 7a der Steuereinrichtung 7 abgelegt bzw. bereitgehalten. Erfindungsgemäß erfolgt folglich die Ermittlung des Füllgrades der Filtereinrichtung 4 für jedes Vorsatzgerät 8 mit unterschiedlichen Kennliniendaten bzw. mit einem unterschiedlichen Teil der Kennliniendaten. Dadurch ist es möglich, mit lediglich einem Druckmesswert den Füllgrad der Filtereinrichtung 4 zu ermitteln.

Gemäß Fig. 1 ist die Druckmesseinrichtung 6 in Strömungsrichtung hinter dem Gebläse 2, angeordnet. Das Vorsatzgerät 8 betreffende Identifikationsdaten werden beispielsweise an der Vorsatzgeräteschnittstelle 10 empfangen oder erzeugt. Die Vorsatzgeräteschnittstelle 10 ist hier als Steckverbinder ausgebildet, der mit einem korrespondierenden Gegenschnittstelle 10a, hier ein Gegensteckverbinder des Vorsatzgerätes 8 elektrisch kontaktierend zusammenwirkt.

Alternativ dazu ist vorgesehen, dass Identifikationsdaten betreffend das mit dem Sauggerät 1 gekoppelte Vorsatzgerät 8 auch über eine Datenschnittstelle 11 verarbeitbar, z. B. empfangbar oder erzeugbar sind.

Die Datenschnittstelle 11 ist dazu ausgebildet und eingerichtet, über ein Netzwerk 12, das beispielsweise als Nahbereichsfunknetz, z. B. WLAN-Netzwerk, ausgebildet ist, mit dem Internet 13 bzw. einem im Internet 13 befindlichen Server 14, Daten auszutauschen bzw. Identifikations- und/oder Kennliniendaten vom Server 14 abzurufen.

Ferner ist die Datenschnittstelle 11 dazu ausgebildet und eingerichtet, über ein Nahbereichsfunknetz oder über ein Netzwerk 12 Daten mit einem mobilen Endgerät 15, beispielsweise dem Smartphone eines Benutzers, auszutauschen. Der Benutzer kann beispielsweise über das mobile Endgerät 15 Identifikationsdaten zum Vorsatzgerät 8 eingeben, oder das mobile Endgerät 15 stellt Kennliniendaten für ein neues Vorsatzgerät 8 an der Datenschnittstelle 11 bereit.

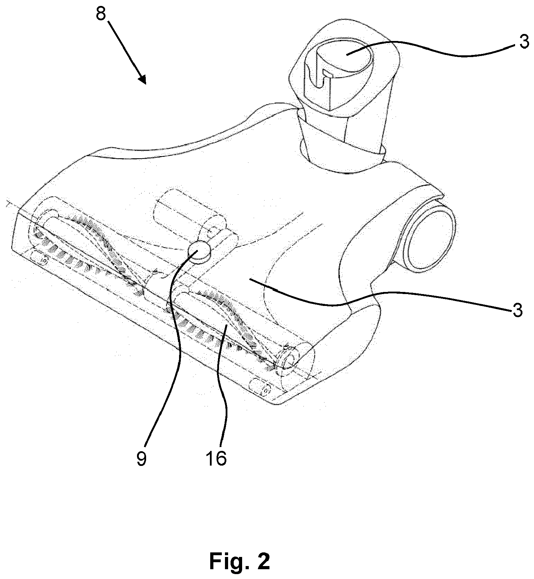

Fig. 2 zeigt ein Ausführungsbeispiel eines Vorsatzgerätes 8 für ein Sauggerät 1, beispielsweise gemäß Fig. 1. Das Vorsatzgerät 8 gemäß Fig. 2 weist eine rotierbare Bodenwalze 16 auf, die zum Lösen und Zuführen von Schmutz zum Saugkanal 3 ausgebildet ist. Das Vorsatzgerät 8 verfügt über ein Identifikationsmittel 9, hier in Form eines RFID-Chips. Das Identifikationsmittel 9 kann von einer entsprechend ausgebildeten Vorsatzgeräteschnittstelle 10 ausgelesen werden, um Identifikationsdaten zu empfangen.

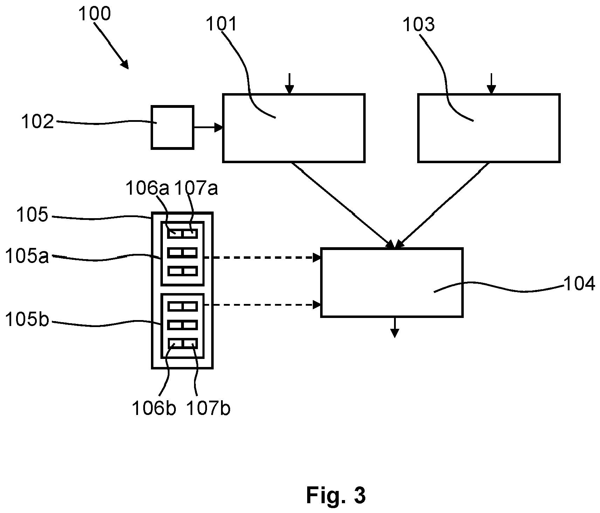

Fig. 3 zeigt ein Ausführungsbeispiel eines schematischen Ablaufs eines Verfahrens 100 zur Ermittlung eines Füllgrades einer Filtereinrichtung 4 eines Sauggerätes 1 mit mindestens einem Saugkanal 3. Das Sauggerät 1 ist zum Koppeln mit einer Mehrzahl unterschiedlicher Vorsatzgeräte 8 an den Saugkanal 3 ausgebildet. Das Verfahren 100 umfasst den Schritt des Verarbeitens 101 von Identifikationsdaten 102 eines mit dem Sauggerät 1 gekoppelten Vorsatzgerätes 8. Das Verarbeiten 101 kann das Empfangen, die Übermittlung oder das Erzeugen von Identifikationsdaten 102 beinhalten. Ferner erfolgt das Ermitteln 103 mindestens eines Druckmesswertes innerhalb des Saugkanals 3. Abschließend erfolgt das Ermitteln 104 mindestens eines Füllgrades der Filtereinrichtung 4 unter Verwendung der verarbeiteten Identifikationsdaten 102 des Vorsatzgerätes 8 sowie des Druckmesswertes und von Kennliniendaten 105.

Die Kennliniendaten 105 umfassen vorzugsweise einen ersten Teil 105a, der Überdruckschwellenwerte 106a für eine erste Kombination aus einem Vorsatzgerät 8 und einer Leistungsstufe des Gebläses 2 umfasst, sowie einen zweiten Teil 105b, der Überdruckschwellenwerte 106b für eine zweite Kombination aus einem Vorsatzgerät 8 und einer Leistungsstufe des Gebläses 2 umfasst. Jedem Überdruckschwellenwert 106a,b ist ein Füllgrad 107a,b der Filtereinrichtung 4 zugeordnet. Die Auswahl der Kennliniendaten 105, also die Auswahl des Teils 105a,b der Kennliniendaten 105, der für die Auswertung verwendet werden soll, erfolgt unter Verwendung der Identifikationsdaten 102 des Vorsatzgerätes 8. In Abhängigkeit von der Art des Vorsatzgerätes 8 werden folglich unterschiedliche Kennliniendaten 105 für die Ermittlung 104 des tatsächlichen Füllgrades der Filtereinrichtung 4 herangezogen. Der ausgewählte Teil 105a,b der Kennliniendaten 105 wird bei der Ermittlung 104 verwendet, indem der aktuell ermittelte Druckmesswert mit jedem der Überdruckschwellenwerte 106a,b abgeglichen wird. Bei einer Übereinstimmung des Druckmesswertes mit dem Überdruckschwellenwert 106a,b, ggf. mit einem vorbestimmten Toleranzbereich, wird der dem jeweiligen Überdruckschwellenwert 106a,b zugeordnete Füllgrad 107a,b als tatsächlicher Füllgrad der Filtereinrichtung 4 ausgewählt. Dadurch ist es auf einfache Weise möglich, mit lediglich einem Druckmesswert den tatsächlichen Füllgrad der Filtereinrichtung 4 zu bestimmen.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Sauggerät
- 2: Gebläse
- 3: Saugkanal
- 4: Filtereinrichtung
- 5: Sauggut
- 6: Druckmesseinrichtung
- 7: Steuereinrichtung
- 7a: Speichermittel
- 8: Vorsatzgerät
- 9: Identifikationsmittel
- 10: Vorsatzgeräteschnittstelle
- 10a: Gegenschnittstelle
- 11: Datenschnittstelle
- 12: Netzwerk
- 13: Internet
- 14: Server
- 15: Mobiles Endgerät
- 16: Bodenwalze
- 17: Gehäuse
- 18: Griff

- 100: Verfahren
- 101: Verarbeiten
- 102: Identifikationsdaten
- 103: Ermitteln eines Druckmesswertes
- 104: Ermitteln eines Füllgrades
- 105: Kennliniendaten
- 105a: Erster Teil von 105
- 105b: Zweiter Teil von 105
- 106a,b: Überdruckschwellenwert
- 107a,b: Füllgrad

## Patentansprüche

**1.** Sauggerät (1) mit mindestens einem Gebläse (2) zum Erzeugen eines Saugluftstroms in einem Saugkanal (3), mindestens einer Filtereinrichtung (4) zur Aufnahme von Sauggut (5), mindestens einer Druckmesseinrichtung (6) und mindestens einer Steuereinrichtung (7), wobei das Sauggerät (1) zum Koppeln mit einer Mehrzahl unterschiedlicher Vorsatzgeräte (8) an den Saugkanal (3) ausgebildet ist,
**dadurch gekennzeichnet, dass**
die Steuereinrichtung (7) zur Ermittlung eines Füllgrades der Filtereinrichtung (4) unter Verwendung mindestens eines Druckmesswertes und von Kennliniendaten (105) sowie zur Auswahl der für die Ermittlung verwendeten Kennliniendaten in Abhängigkeit von einem mit dem Sauggerät (1) verbundenen Vorsatzgerät (8) ausgebildet und eingerichtet ist.

**2.** Sauggerät (1) nach Anspruch 1,
**dadurch gekennzeichnet, dass**
der Druckmesswert einen Überdruckmesswert repräsentiert, insbesondere einen Überdruckmesswert, der im Strömungskanal (3) an einer Stelle in Strömungsrichtung hinter der Filtereinheit (4) erfassbar ist.

**3.** Sauggerät (1) nach Anspruch 1 oder 2,
**dadurch gekennzeichnet, dass**
zumindest ein Abgleichen des Druckmesswertes mit zumindest einem Teil der Kennliniendaten (105) erfolgt, wodurch eine Zuordnung zu einem Füllgrad der Filtereinrichtung (4) erfolgt.

**4.** Sauggerät (1) nach einem der Ansprüche 1 bis 3,
**dadurch gekennzeichnet, dass**
zumindest ein Teil der Kennliniendaten (105) eine Mehrzahl von Überdruckschwellenwerten repräsentiert, wobei jedem Überdruckschwellenwert mindestens ein Füllgrad der Filtereinrichtung (4) zugeordnet ist.

**6.** Sauggerät (1) nach einem der Ansprüche 1 bis 5,
**dadurch gekennzeichnet, dass**
die Kennliniendaten (105) für jedes Vorsatzgerät (8) aus einer Mehrzahl von Vorsatzgeräten (8) einen unterschiedlichen Satz von Überdruckschwellenwerten umfassen, wobei insbesondere ein eigener Satz von Überdruckschwellenwerten für jede Kombination aus Leistungsstufe des Gebläses (2) und jedem Vorsatzgerät (8) aus einer Mehrzahl von Vorsatzgeräten (8) bereitgehalten wird.

**5.** Sauggerät (1) nach einem der Ansprüche 1 bis 4,
**dadurch gekennzeichnet, dass**
die Auswahl der für die Ermittlung verwendeten Kennliniendaten (105) ferner in Abhängigkeit von einer von einem Benutzer gewählten Leistungsstufe des Gebläses (2) erfolgt.

**7.** Sauggerät (1) nach einem der Ansprüche 1 bis 6,
**dadurch gekennzeichnet, dass**
ein Vorsatzgerät (8) betreffende Identifikationsdaten (102) durch Auslesen mindestens eines Identifikationsmittels (9) des Vorsatzgerätes (8) und/oder durch Übermittlung an einer Vorsatzgeräteschnittstelle (10) und/oder einer Datenschnittstelle (11) verarbeitet und/oder erzeugt werden.

**8.** Sauggerät (1) nach einem der Ansprüche 1 bis 7,
**dadurch gekennzeichnet, dass**
zumindest ein Teil der Kennliniendaten (105) in einem Speichermittel (7a), insbesondere einem Speichermittel (7a) der Steuereinrichtung (7), bereitgehalten werden und/oder dass zumindest ein Teil der Kennliniendaten (105) über eine Datenschnittstelle (105), vorzugsweise aus einem Netzwerk (12), beispielsweise von einem Server (14) oder einem mobilen Endgerät (15), abrufbar und/oder übermittelbar sind.

**9.** Sauggerät (1) nach einem der Ansprüche 1 bis 8,
**dadurch gekennzeichnet, dass**
zumindest ein Teil der Kennliniendaten (105) bei jedem Einschalten des Sauggerätes (1) und/oder bei jedem Wechsel des Vorsatzgerätes (8) und/oder bei jedem Wechsel der Leistungsstufe von der Steuereinrichtung (7) aus einem Speichermittel (7a) ausgelesen und für eine Ermittlung (104) bereitgehalten werden, insbesondere um ein Abgleichen mit einem Druckmesswert durchzuführen.

**10.** Verfahren (100) zur Ermittlung eines Füllgrades einer Filtereinrichtung (4) eines Sauggerätes (1) mit mindestens einem Saugkanal (3), wobei das Sauggerät (1) zum Koppeln mit einer Mehrzahl unterschiedlicher Vorsatzgeräte (8) an den Saugkanal (3) ausgebildet ist, zumindest aufweisend die folgenden Verfahrensschritte:
- Verarbeiten (101) von Identifikationsdaten (102) eines mit dem Sauggerät (1) gekoppelten Vorsatzgerätes (8),
- Ermitteln (103) mindestens eines Druckmesswertes innerhalb des Saugkanals (3),
- Ermitteln (104) mindestens eines Füllgrades der Filtereinrichtung (4) unter Verwendung der verarbeiteten Identifikationsdaten (102) des Vorsatzgerätes (8), des Druckmesswertes sowie von Kennliniendaten (105).

**11.** Verfahren (100) nach Anspruch 10,
**dadurch gekennzeichnet, dass**
das Ermitteln (104) des Füllgrades die Auswahl von Kennliniendaten (105,105a,105b) umfasst, wobei die Auswahl der Kennliniendaten (105,105a,105b) unter Verwendung der Identifikationsdaten (102) erfolgt.

**12.** Verfahren (100) nach einem der Ansprüche 10 oder 11,
**dadurch gekennzeichnet, dass**
das Ermitteln (104) des Füllgrades ein Abgleichen des Druckmesswertes mit zumindest einem Teil der ausgewählten Kennliniendaten (105,105a,105b) umfasst.

**13.** Verfahren (100) nach einem der Ansprüche 10 bis 12,
**dadurch gekennzeichnet, dass**
die Kennliniendaten (105) zumindest eine Mehrzahl von Überdruckschwellenwerten umfassen, wobei jeder Überdruckschwellenwert einem Füllgrad der Filtereinrichtung (4) zugeordnet ist, bevorzugt dass für jedes Vorsatzgerät (8) aus einer Mehrzahl von Vorsatzgeräten (8) ein unterschiedlicher Satz von Überdruckschwellenwerten bereitgehalten wird, besonders bevorzugt dass ein eigener Satz von Überdruckschwellenwerten für jede Kombination aus Leistungsstufe des Gebläses (2) und jedem Vorsatzgerät (8) aus einer Mehrzahl von Vorsatzgeräten (8) bereitgehalten wird.

**14.** Verfahren (100) nach einem der Ansprüche 10 bis 13,
**dadurch gekennzeichnet, dass**
das Verarbeiten (101) von Identifikationsdaten (102) das Erzeugen von Identifikationsdaten (102) durch die Steuereinrichtung (7) und/oder das Empfangen und/oder Übermitteln von Identifikationsdaten (102) über eine Vorsatzgeräteschnittstelle (10) und/oder das Empfangen und/oder Übermitteln von Identifikationsdaten (102) betreffend das gekoppelte Vorsatzgerät (8) über eine Datenschnittstelle (11) umfasst.

**15.** Verfahren (100) nach einem der Ansprüche 10 bis 14,
**dadurch gekennzeichnet, dass**
bei jedem Einschalten des Sauggerätes (1) und/oder bei jedem Wechsel des Vorsatzgerätes (8) und/oder bei jedem Wechsel der Leistungsstufe des Gebläses (2) die zu der aktuellen Kombination von Leistungsstufe und Vorsatzgerät (8) korrespondierenden Überdruckschwellenwerte aus den Kennliniendaten (105) zur Zuordnung eines Füllstandes von der Steuereinrichtung (7) aus einem Speichermittel (7a) ausgelesen und für eine Ermittlung (104) bereitgehalten werden.
